# NEUE EUROPÄISCHE PATENTSCHRIFT

(11) **EP 1 711 541 B2**
(45) Veröffentlichungstag und Bekanntmachung des Hinweises auf die Entscheidung über den Einspruch: **23.09.2015**
(45) Hinweis auf die Patenterteilung: 24.08.2011
(21) Anmeldenummer: 05700996.1
(22) Anmeldetag: 18.01.2005
(51) Int. Cl.: C08F 20/00

(54) **VERFAHREN ZUR HERSTELLUNG VON POLYMEREN**
METHOD FOR PRODUCING POLYMERS
PROCEDE POUR PREPARER DES POLYMERES

(30) Priorität: 28.01.2004 DE 102004004496; 26.11.2004 DE 102004057280
(43) Veröffentlichungstag der Anmeldung: 18.10.2006
(73) Patentinhaber: BASF SE, 67056 Ludwigshafen (DE)
(72) Erfinder: DANIEL, Thomas, 67165 Waldsee (DE); RIEGEL, Ulrich, 66849 Landstuhl (DE); ELLIOTT, Mark, 67063 Ludwigshafen (DE)
(86) Internationale Anmeldenummer: PCT/EP2005/000421
(87) Internationale Veröffentlichungsnummer: WO 2005/073260

(56) Entgegenhaltungen:
- EP- - 1178 059 0A2
- EP-A- 0 372 706
- WO-A-2005/032498
- WO-A1-2004/013196
- FR-A- 2 859 209
- JP-A- H01 178 509
- JP-A- H01 318 021
- JP-A- H03 115 313
- JP-A- H06 211 934
- JP-A- H07 228 640
- US-A- 4 703 067
- JIAZENG S ET AL: "Poly methacrylate-plasticiser-salt blends as solid polymer electrolytes" ELECTROCHIMICA ACTA, ELSEVIER SCIENCE PUBLISHERS, BARKING, GB, Bd. 40, Nr. 13, Oktober 1995 (1995-10), Seiten 2301-2304, XP004019703 ISSN: 0013-4686

## Beschreibung

Die Erfindung betrifft ein Verfahren zur Herstellung von Polymeren, die (Meth)acrylatsalzeinheiten enthalten, in wässrigem Medium.

Die Herstellung von Natriumacrylat ist bekannt. So mischt man beispielsweise gemäß der Lehre der GB-C 1,073,856 eine Lösung von Natronlauge in Methanol mit einer Lösung von Acrylsäure in Methanol bei Temperaturen in dem Bereich von 5 bis 50°C. Vorzugsweise fügt man die Lösung der Natronlauge in Methanol zur Acrylsäurelösung. Das dabei entstehende Natriumacrylat fällt aus der Lösung aus und kann zentrifugiert bzw. abfiltriert werden. Das feste Natriumacrylat kann getrocknet werden, wobei man vorzugsweise eine Temperatur von unterhalb 40°C einstellt.

Aus der EP-B 372 706 ist die Herstellung von Salzen der Acrylsäure durch Neutralisation von Acrylsäure mit einer basischen Verbindung in wässrigem Medium bekannt, wobei man Acrylsäure und basische Verbindung zu Wasser zusetzt und den Neutralisationsgrad der Acrylsäure zunächst auf 75 bis 100 Mol-% einstellt, dann den Neutralisationsgrad durch weitere Zugabe der basischen Verbindung auf 100,1 bis 110 Mol-% erhöht, das Reaktionsgemisch 1 Minute bis 120 Minuten bei diesem Neutralisationsgrad belässt und anschließend soviel Acrylsäure zugibt, dass der Neutralisationsgrad der Acrylsäure 20 bis 100 Mol-% beträgt. Die so erhältlichen wässrigen Lösungen von teilweise oder vollständig neutralisierter Acrylsäure werden in Gegenwart von Vernetzem zur Herstellung von vernetzten Polyacrylaten eingesetzt, die einen geringeren Restmonomerengehalt als diejenigen Polymeren haben, die durch Polymerisation von Acrylaten erhältlich sind, die nicht mit einem Überschuss an Neutralisationsmittel behandelt wurden.

In DE 102 34 772 wird ein Verfahren zur Herstellung von Superabsorbern beschrieben. Hierbei wird aus festem Na-Acrylat eine nicht übersättigte Lösung hergestellt. Offenbart sind auch Aufschwämmungen von Natriumacrylat in Wasser.

Um eine vorzeitige Polymerisation zu vermeiden bzw. zurückzudrängen, enthält die handelsübliche Acrylsäure in aller Regel mindestens einen Stabilisator. Polymerisiert man eine stabilisatorhaltige Acrylsäure, so erhält man beispielsweise bei der Herstellung von superabsorbierenden Polymeren nach dem aus der obengenannten Literaturstelle bekannten Verfahren gefärbte Produkte. Um farblose Superabsorber herzustellen, ist es erforderlich, eine stabilisatorhaltige Acrylsäure zunächst zu destillieren oder den Stabilisator durch Absorption z.B. an Aktivkohle, aus der Acrylsäure zu entfernen und die Acrylsäure möglichst umgehend zu polymerisieren. Die bisher angewandten Verfahren zur Herstellung von vernetzten superabsorbierenden Polyacrylaten zeichnen sich besonders dadurch aus, dass ungesättigte Lösungen von Natriumacrylat eingesetzt werden wodurch die Raum-Zeit-Ausbeute nicht maximiert wird.

Der vorliegenden Erfindung liegt die Aufgabe zugrunde, ein Polymerisationsverfahren zur Verfügung zu stellen, welches die Raum-Zeit-Ausbeute durch Einsatz einer hochkonzentrierten Monomerenlösung verbessert und auf diesem Weg qualitativ hochwertige Polymere kostengünstig zur Verfügung zu stellen.

Überraschend wurde nun gefunden, dass Polymere, die durch Polymerisation übersättigter (Meth)acrylatsalzlösungen erhalten werden, eine sehr gute Produktqualität mit hoher Raum-Zeit-Ausbeute vereinen können.

So wurde ein Verfahren zur Herstellung von Polymeren, die (Meth)acrylatsalzeinheiten enthalten, durch radikalische Polymerisation von (Meth)acrylatsalz und gegebenenfalls anderen Monomeren in wässrigem Medium gefunden, das dadurch gekennzeichnet ist, dass man eine übersättigte wässrige Lösung von (Meth)acrylatsalz einsetzt und man zur Herstellung der übersättigten, wässrigen Monomer lösung festes, wasserfreies Meth)acrylatsalz einsetzt.

Im Folgenden wird die Erfindung am Beispiel von Natriumacrylat für alle erfindungsgemäßen (Meth)acrylatsalze beispielhaft erläutert. Anstelle von Natriumacrylat können auch die anderen erfindungsgemäßen (Meth)acrylatsalze oder Mischungen von (Meth)acrylatsalzen verwendet werden. Anstelle von Acrylsäure entsprechend Methacrylsäure oder Gemische aus Methacrylsäure und Acrylsäure.

Polymere die nach der erfindungsgemäßen Methode hergestellt werden können sind insbesondere Flockungsmittel und Superabsorber. Superabsorber sind bevorzugt. Unter Superabsorber werden Polymere verstanden die bei einem Druck von 5 g/cm² mindestens 10 g Wasser pro g Polymer absorbieren können.

Die Aufgabe wird erfindungsgemäß gelöst mit einem Verfahren zur Herstellung von Polymeren, die Natriumacrylateinheiten enthalten, durch radikalische Polymerisation von Natriumacrylat und gegebenenfalls anderen Monomeren in wässrigem Medium, wenn man eine übersättigte wässrige Lösung von Natriumacrylat einsetzt, die durch Lösen von festem Natriumacrylat in einem wässrigen Medium und anschließendem Abkühlen erhältlich ist oder die durch Neutralisation einer ausreichend hoch konzentrierten Acrylsäurelösung vor der Polymerisation erhältlich ist. Diese übersättigte Lösung kann falls gewünscht auch stabilisiert werden, z. B. durch Zusatz entsprechender Polymere. Aus der übersättigten Lösung kann Natriumacrylat teilweise auch wieder ausgefällt werden.

Unter einer übersättigten Lösung wird der metastabile Zustand verstanden, in dem sich mehr Salz der Acrylsäure in Lösung befindet, als in einer vollständig gesättigten Lösung des Salzes im thermodynamisch stabilen Gleichgewicht. Unter übersättigter Lösung wird bevorzugt eine Lösung verstanden, die mehr als das 1,01-fache, bevorzugt mehr als 1,03-fache, mehr bevorzugt mehr als 1,05-fache, besonders bevorzugt mehr als 1,07-fache insbesondere mehr als 1,1-fache oder sogar mehr als 1,2-fache an Salz im Vergleich zur thermodynamisch stabilen Lösung enthält.

Natriumacrylat in fester Form ist zwar in der Literatur beschrieben, wurde jedoch bisher nicht zur Herstellung von Polymeren verwendet. Um Natriumacrylateinheiten enthaltende Polymere herzustellen, ging man bisher immer von wässrigen Natriumacrylatlösungen aus, die - meistens unmittelbar vor der Polymerisation - durch Neutralisieren von reiner Acrylsäure oder von stabilisatorhaltiger Acrylsäure mit wässriger Natronlauge hergestellt wurde. Da reine Acrylsäure nicht beständig ist, war es erforderlich, sie direkt nach der Destillation bzw. nach einer fraktionierten Kristallisation mit wässriger Natronlauge zu neutralisieren. Das feste Natriumacrylat ist ausreichend beständig, so dass es ohne Stabilisierung gegen Polymerisation längere Zeit gelagert und transportiert werden kann. Für Lagerung und Transport von Natriumacrylat sollten die Temperaturen 40°C nicht übersteigen. Sie liegen meistens in dem Bereich von beispielsweise 5 bis 35°C, insbesondere 10 bis 20°C.

Das feste Natriumacrylat hat beispielsweise einen mittleren Teilchendurchmesser von 45 µm bis 2000 µm, vorzugsweise 45 µm bis 500 µm. Vorzugsweise geht man zur Herstellung der wässrigen Monomerlösungen von wasserfreiem Natriumacrylat aus. Das feste, pulverförmige Natriumacrylat, das hygroskopisch ist, kann jedoch auch beispielsweise 0,1 bis 10 Gew.%, insbesondere 0,5 bis 2 Gew.% Wasser enthalten. Beim Erhitzen von festem Natriumacrylat tritt bis zu einer Temperatur von 250°C praktisch keine Veränderung des festen Salzes ein, es zersetzt sich vielmehr erst oberhalb dieser Temperatur beim Schmelzen.

Das feste Natriumacrylat ist sehr leicht in Wasser löslich. Man kann daraus wässrige Monomerlösungen oder wässrige Dispersionen bereiten, die beispielsweise 5 bis 75, vorzugsweise 20 bis 45 Gew.-% Natriumacrylat enthalten. Oberhalb einer Konzentration von mehr als 45 Gew.% Natriumacrylat liegen Dispersionen von Natriumacrylat vor. Diese Lösungen bzw. Dispersionen können direkt polymerisiert werden. Bei der Polymerisation der wässrigen Natriumacrylatdispersionen reagiert zunächst das in Wasser gelöste Natriumacrylat, das dispergierte Natriumacrylat löst sich im Verlauf der Polymerisation. Man kann jedoch auch gegebenenfalls Acrylsäure zu diesen Lösungen geben, so dass man eine partiell neutralisierte Acrylsäure mit einem Neutralisationsgrad von beispielsweise 10 bis 95 Mol-%, vorzugsweise 40 bis 90 Mol-% und insbesondere 60 bis 80 Mol-% erhält.

Bevorzugt wird im erfindungsgemäßen Verfahren Acrylsäure mit Natronlauge, Natriumhydroxid, Natriumcarbonat oder Natriumhydrogencarbonat zu einer übersättigten wässrigen Lösung von Natriumacrylat und Acrylsäure neutralisiert, wobei das Natriumacrylat teilweise ausgefällt wird. Werden andere Salze oder Salzgemische eingesetzt werden Basen mit entsprechend anderen Kationen eingesetzt.

Das einzusetzende Natriumhydroxid liegt üblicherweise als mindestens 25 Gew.%ige wässrige Lösung vor, bevorzugt wird jedoch 50 Gew.%ige wässrige Lösung eingesetzt. Es kann aber auch Natriumhydroxid mit einem Gehalt von mehr als 50 Gew.%, z.B. als ca. 70 Gew.%ige wachsartige Masse oder als 100%iger Feststoff eingesetzt werden.

Bevorzugt ist aber der Einsatz einer pumpbaren und möglichst hochkonzentrierten Form des Natriumhydroxids, gegebenenfalls zur Schmelzpunkterniedrigung im Gemisch mit Kaliumhydroxid oder anderen Substanzen, in allen kontinuierlichen Verfahrensschritten.

Wenn das saure Monomer Acrylsäure oder Methacrylsäure ist, dann wird dieses als mindestens 70 Gew.%ige wässrige Lösung, bevorzugt mindestens 85 Gew.%ige wässrige Lösung, besonders bevorzugt mindestens 95 Gew.%ige wässrige Lösung und am meisten bevorzugt als mindestens 99,3 Gew.%ige wässrige Lösung und üblicherweise höchstens als 100 Gew.%ige Reinsubstanz eingesetzt.

Zu der so erhaltenen Monomerlösung fügt man dann noch den Vernetzer und die notwendigen Initiatoren hinzu. Der Vernetzer kann, sofern er chemisch ausreichend stabil ist, jedoch auch zusammen mit der Acrylsäure im letzten Herstellungsschritt der übersättigten Lösung hinzugefügt werden.

In einer bevorzugten Ausführung der Erfindung wird die Herstellung dieser übersättigten Monomerlösung in jedem Schritt kontinuierlich durchgeführt und die Lösung wird dann vorzugsweise noch vor der vollständigen Ausfällung des Natriumacrylats vorzugsweise auf einem Band, besonders bevorzugt in einem Sprühpolymerisationsverfahren polymerisiert.

In einer weiteren Ausführung der Erfindung wird der erste Schritt, die Herstellung der überneutralisierten Natriumacrylatiösung, in einem Batchreaktor durchgeführt. Der zweite Schritt, die Einstellung des endgültigen Neutralisationsgrades und Feststoffgehaltes durch Zugabe von Acrylsäure wird dann kontinuierlich durchgeführt, wobei ein oder mehrere Batchreaktoren im Verfahren verwendet werden können, um den ersten Schritt auszuführen. Bevorzugt ist auch hier ein kontinuierliches Polymerisationsverfahren nachgeschaltet und die Reaktionslösung wird noch vor vollständiger Fällung des Natriumacrylats diesem zugeführt.

Ein besonderer Vorzug des erfindungsgemäßen Verfahrens ist die Abführung eines großen Teils oder bevorzugt der gesamten Neutralisationswärme bei der Herstellung der übemeutralisierten Natriumacrylatlösung, da hohe Starttemperaturen in der nachfolgenden Polymerisation die Produktqualität deutlich verschlechtern. Vorzugsweise wird die übemeutralisierte Natriumacrylatlösung im ersten Schritt zu mehr als 105 mol%, mehr bevorzugt zu mehr als 110 mol% und besonders bevorzugt zu mehr als 120 mol% neutralisiert. Die Temperatur der ersten Methacrylatsalzlösung wird auf unter 40°C, bevorzugt unter 35°C, mehr bevorzugt unter 30°C, besonders bevorzugt unter 25°C, insbesondere unter 20°C eingestellt. Erst durch die Zugabe des zusätzlichen sauren Monomeren im zweiten, kontinuierlichen Schritt kommt es beim erfindungsgemäßen Verfahren zur Übersättigung, wobei ein wesentlicher Grundzug des Verfahrens darin besteht, dass die so erhaltene übersättigte Lösung von Natriumacrylat ohne wesentliche Verzögerung und noch vor vollständiger Ausfällung des Natriumacrylats einem kontinuierlichen Polymerisationsreaktor zugeführt wird. Dadurch kann eine Phasenseparation sowie eine Verstopfung der Zuführleitungen vermieden werden. Die entstehende Neutralisationswärme wird im allgemeinen nicht vollständig, bevorzugt nur teilweise (im Allgemeinen weniger als 50%, bevorzugt weniger als 25%, insbesondere weniger als 10%), insbesondere nicht durch aktive Kühlung entfernt. Die Zuführung dieser übersättigten Lösung in den Polymerisationsreaktor erfolgt unverzüglich nach Herstellung durch kontinuierliches Mischen. Die Verweilzeit in der Zuführung vom Mischer in den Polymerisationsreaktor beträgt weniger als 10 Minuten, bevorzugt weniger als 5 Minuten, mehr bevorzugt weniger als 3 Minuten, und am meisten bevorzugt weniger als 1 Minute.

In einer weiteren Ausführung der Erfindung werden alle Schritte einzeln nacheinander im Batchreaktor ausgeführt, wobei Knetreaktoren mit ein, zwei oder mehreren Wellen oder anderen Rührorganen bevorzugt sind. In diesem Fall kann die Wärme ganz oder teilweise auch über eine Kühlung der Reaktorwände abgeführt werden.

In einer weiteren Ausführung der Erfindung wird der erste Schritt, die Herstellung der 90 bis 100 mol% neutralisierten Monomerlösung in einem Rührkessel mit Wärmetauscher durchgeführt und die erhaltene Lösung wird in einen gerührten Batchreaktor überführt, wobei Knetreaktoren mit ein, zwei oder mehreren Wellen oder anderen Rührorganen bevorzugt sind. Im Batchreaktor wird dann der Schritt zwei, die Zugabe der Acrylsäurelösung und der anderen Komponenten durchgeführt. Auch in diesem Fall kann die Wärme ganz oder teilweise über eine Kühlung der Reaktorwände abgeführt werden.

Die so erhaltenen übersättigten wässrigen Monomerlösungen bzw. Ausfällungen von Natriumacrylat können gegebenenfalls weitere andere Monomere enthalten. Dies können wasserlösliche Comonomere sein, wie z.B. Methacrylsäure, Maleinsäure, Itaconsäure, 2-Acrylamido-2-methylpropansulfonsäure, Alkalimetall- und Ammoniumsalze sowie Amide der genannten Säuren, Hydroxyalkylester von Acrylsäure oder Methacrylsäure, N-Vinylformamid und Diallyldimethylammoniumchlorid. Die erfindungsgemäß einzusetzenden wässrigen Monomerlösungen von Natriumacrylat können auch mit wasserunlöslichen Monomeren wie Styrol und/oder (Meth)acrylsäureestem von einwertigen Alkoholen, z.B. n-, tert.- oder Iso-butylacrylat, Acrylnitril, Methacrylnitril und/oder Vinylestern wie Vinylacetat oder Vinylpropionat, copolymerisiert werden. Hierbei erhält man wässrige Dispersionen oder - je nach Menge der bei der Copolymerisation eingesetzten wasserlöslichen Monomeren - wässrige Polymerlösungen von hydrophob modifizierten Polymeren.

In der bevorzugten Verfahrensvariante setzt man der Acrylatlösung vor der Polymerisation noch saure Comonomere wie z.B. Acrylsäure zu.

Das feste Natriumacrylat kann erfindungsgemäß auch ganz oder teilweise durch ein anderes festes wasserlösliches Salz ersetzt werden, z.B. durch Ammonium- oder andere Alkalisalze wie insbesondere Kaliumacrylat oder durch Erdalkalimetallacrylate wie insbesondere Magnesium-, Calcium-, Strontium oder Bariumacrylat. Weiterhin können Zink- oder Aluminiumacrylat eingesetzt werden. Auch Mischungen der in Betracht kommenden festen Alkalimetall- und Erdalkalimetallacrylate können polymerisiert werden. Die übersättigten Lösungen dieser Salze enthalten entsprechend ihrer Löslichkeit zum Teil auch höhere Konzentrationen an Acrylat. Die hier beschriebene Erfindung wird am Beispiel Natriumacrylat im Detail erläutert, kann aber vom Fachmann entsprechend auf andere Salze des Acrylats übertragen werden. Die Erfindung kann entsprechend auch bei Salzen des Methacrylats oder Gemischen aus Acrylaten und Methacrylaten eingesetzt werden. Bevorzugt ist die Verwendung von Acrylaten und Acrylsäure. Bei den Salzen sind Ammonium- und Alkalisalze bevorzugt, besonders Natrium und Kaliumsalze, insbesondere Natriumsalze.

Die erfindungsgemäß einzusetzenden übersättigten wässrigen Monomerlösungen von Natriumacrylat und gegebenenfalls Acrylsäure werden vorzugsweise zur Herstellung von wasserunlöslichen, vernetzten, gelförmigen Polymerisaten verwendet. Solche Polymeren werden erhalten, indem man die erfindungsgemäß einzusetzenden übersättigten wässrigen Lösungen von Natriumacrylat in Gegenwart von 0,001 bis 5 Gew.-%, vorzugsweise 0,01 bis 2 Gew.-% eines mindestens zwei ethylenisch ungesättigte Doppelbindungen aufweisenden Monomeren polymerisiert. Geeignete Vernetzer sind beispielsweise N,N'-Methylenbisacrylamid, Diacrylate oder Dimethacrylate von Polyalkylenglykolen mit Molmassen von 100 bis 1500, Trimethylolpropantrimethacrylat, mindestens zweifach mit Acrylsäure oder mit Methacrylsäure veresterte Umsetzungsprodukte von Trimethylolpropan oder Glycerin mit 1 bis 8 Mol Ethylenoxid pro OH-Gruppe, insbesondere die vollständig mit Acrylsäure oder Methacrylsäure veresterten Umsetzungsprodukte von Trimethylolpropan oder Glycerin mit 2 bis 6 Mol Ethylenoxid pro OH-Gruppe, Sorbitoltriallylether, Pentaerythritoltriallylether, Polyethylenglykoldiallylether, Triallylamin oder Tetraallylammoniumchlorid. Verfahren zur Herstellung der gelförmigen, vernetzen Polymeren sind beispielsweise aus der zum Stand der Technik genannten EP-B 372 706, Seiten 6 und 7 sowie der WO 99/42494, Seiten 4 bis 8 sowie der WO 01/38402 bekannt. Man erhält teilchenförmige Hydrogele, die einen mittleren Teilchendurchmesser von beispielsweise 45 bis 1000 µm, vorzugsweise 150 bis 850 µm, besonders bevorzugt <700 µm haben.

Um teilchenförmige Hydrogele mit einer hohen Gelfestigkeit herzustellen, unterwirft man die teilchenförmigen Hydrogele einer Oberflächennachvemetzung. Beispiele für geeignete Oberflächennachvernetzungsmittel sind mehrwertige Alkohole, vgl. US-A-4 666 983, sowie 2-Oxazolidinone, vgl. WO 99/42494. Die Nachvernetzung von teilchenförmigen Hydrogelen ist in den genannten Literaturstellen ausführlich beschrieben. Üblicherweise besprüht man die teilchenförmigen Hydrogele mit einer Lösung mindestens eines Vernetzers in einem inerten Lösemittel wie Wasser oder Gemischen von Wasser mit einem einwertigen oder mehrwertigen Alkohol. Zur Oberflächennachvernetzung erhitzt man die mit einer Lösung des Vernetzers behandelten Hydrogelteilchen auf eine Temperatur in dem Bereich von 50 bis 250°C, vorzugsweise 115 bis 190°C.

Erfindungsgemäß wird festes Natriumacrylat zur Herstellung der übersättigten wässrigen Monomerlösungen verwendet. Dies führt zu hochkonzentrierten Reaktionsgemischen, die gegenüber den bekannten Verfahren eine gesteigerte Raum-Zeit-Ausbeute durch den stark erhöhten Feststoffgehalt ermöglichen.

Die erfindungsgemäßen übersättigten Lösungen von Natriumacrylat sind in jedem bekannten Polymerisationsverfahren verwendbar. Beispielsweise können sie bevorzugt in Kneterverfahren oder Bandverfahren eingesetzt werden. Weiterhin können sie in dünnen Schichten auf Walzen oder Bändern polymerisiert werden, oder aber sie werden versprüht und als Tröpfchen in der Gasphase polymerisiert.

Die Salze der Acrylsäure sind in festem Zustand als auch in wässriger Lösung stabil, so dass bei der Lagerung der festen Salze bzw. von wässrigen Lösungen der Salze keine Diacrylsäure gebildet wird. Polymere, die aus diesem Monomeren hergestellt werden, können ohne Erhöhung des Restgehaltes an Acrylsäure im Polymeren auf höhere Temperaturen erhitzt werden, z.B. auf 190 bis 210°C. Wird dagegen bei der Polymerisation Acrylsäure eingesetzt, die Diacrylsäure enthält, so beobachtet man beim Erhitzen von Polymeren, die aus diesen Monomeren hergestellt wurden, eine Rückspaltung der einpolymerisierten Diacrylsäure unter Freisetzung von Acrylsäure. Daher haben solche Polymere nach einer thermischen Beanspruchung einen höheren Restmonomergehalt als vorher. Natriumacrylat braucht außerdem nicht durch Zusatz von Inhibitoren gegen vorzeitige Polymerisation stabilisiert zu werden.

So erhält man beispielsweise nach der Oberflächenvemetzung teilchenförmige Hydrogele mit einer Farbzahl nach DIN 5033 L ≥90 sowie Farbzahl b < 10, vorzugsweise ist L ≥93 und b < 8.

Die Werte für die SFC (Saline Flow Conductivity) der an der Oberfläche nachvemetzten Teilchen betragen beispielsweise >25, bevorzugt >60 und insbesondere >100.

Der Gehalt an restlicher Acrylsäure in den teilchenförmigen Hydrogelen, die einer Oberflächennachvernetzung unterworfen wurden, liegt beispielsweise <500 ppm, vorzugsweise <300 ppm.

Diese Teilchen haben eine CRC (Centrifuge Retention Capacity) von 20 bis 40 g/g und weisen einen Gehalt an 16h-Extrahierbaren Bestandteilen von unter 20 Gew.%, bevorzugt unter 15 Gew.%, besonders bevorzugt unter 10 Gew.% und am meisten bevorzugt unter 7,5 Gew.% nach Oberflächennachvernetzung auf.

### Meßmethoden

Die Bestimmung der 16 h-Extrahierbaren wurde gemäß ISO/DIS 17190-10 durchgeführt. SFC (Saline Flow Conductivity) wurde nach der in der US 5,599,335 angegebenen Testmethode bestimmt.

CRC (Centrifuge Retention Capacity) und AUL (Absorption under Load) wurden nach der auf den Seiten 8 und 9 der WO 99/42494 gegebenen Vorschrift ermittelt.

Die Farbzahlen wurden nach DIN 5033 ermittelt (siehe auch Richard S. Hunter, The Measurement of Appearance, Wiley NY 1975). Verwendet wurde ein Hunterlab LS 5100 Colorimeter.

### Beispiel 1 (nicht erfindungsgemäß)

In einem gut gerührten Laborreaktor mit Kühlmantel werden 254 g deionisiertes Wasser und 339,2 g 50 Gew.%-ige Natriumhydroxidlösung vorgelegt. Dann werden langsam und unter guter Kühlung 406,8 g Acrylsäure zugetropft, wobei die Temperatur der Reaktionslösung nicht über 40°C ansteigen darf. Es kommt zu einer teilweisen Ausfällung von feinteiligem Natriumacrylat welches zur Oberfläche aufschwimmt. Nach Beendigung der Laugezugabe wird auf 20°Cgekühlt und es werden noch 0,407 g 15-fach ethoxyliertes Trimethylolpropantriacrylat (SR 9035, Fa. Sartomer) zugegeben.

100 g dieser Reaktionslösung gibt man in eine kleine Wanne aus rostfreiem Stahl, so dass die Schichtdicke ca. 1 cm beträgt. Man fügt noch 0,10 g Kaliumpersulfat - gelöst in sehr wenig Wasser - hinzu, rührt kurz um und stellt die Wanne auf eine Heizplatte, deren Oberflächentemperatur ca. 120°Cbeträgt.

Nach kurzer Zeit beginnt die Reaktion lebhaft und unter Wasserverdampfung, wobei das ausgefallene feste Natriumacrylat langsam und vollständig in Lösung geht und mit einpolymerisiert wird. Nach Beendigung der Reaktion wird die harte Masse in grobe, ca. 1 cm große Stücke gebrochen oder mit einer Schere zerschnitten und bei 140°Cim Umluftschrank ca. 3 h getrocknet. Vor und nach der Trocknung wird zurückgewogen, der Feststoffgehalt der gebrochenen Masse beträgt nach der Polymerisation ca. 68 Gew.%.

Das getrocknete Polymer wird gemahlen und bei 150 - 850 Mikrometer abgesiebt. Es weist folgende Eigenschaften auf:

CRC = 38 g/g, AUL 0.3 psi = 10 g/g, Extrahierbare 3h = 16 Gew.%

20 g des pulverisierten Polymers wird nun mit einer Lösung von 0,02 g Ethylengylcoldiglycidylether in 1,0 g Wasser unter Rühren besprüht und anschließend 1 h bei 150°Cauf einem Uhrglas im Umluftschrank getrocknet. Es wird dann nochmals über ein 850 Mikrometer-Sieb gesiebt, um Klumpen zu entfernen.

Das getrocknete Polymer weist nun folgende Eigenschaften auf:

CRC = 36 g/g, AUL 0.3 psi = 34 g/g, AUL 0.7 psi = 21 g/g,

Extrahierbare 3h = 8 Gew.%

### Beispiel 2 (nicht erfindungsgemäß)

In einem gut gerührten Laborreaktor mit Kühlmantel werden 254 g deionisiertes Wasser und 406,8 g Acrylsäure vorgelegt. Dann werden langsam und unter guter Kühlung 339,2 g 50 Gew.%ige Natriumhydroxidlösung zugetropft, wobei die Tem-peratur der Reaktionslösung nicht über 40°Cansteigen darf. Es kommt zu einer teilweisen Ausfällung von feinteiligem Natriumacrylat welches zur Oberfläche aufschwimmt. Nach Beendigung der Laugezugabe wird auf 20°Cgekühlt und es werden noch 0,814 g 15-fach ethoxyliertes Trimethylolpropantriacrylat (SR 9035, Fa. Sartomer) zugegeben.

100 g dieser Reaktionslösung gibt man in eine kleine Wanne aus rostfreiem Stahl, so dass die Schichtdicke ca. 1 cm beträgt. Man fügt noch 0,10 g Kaliumpersulfat -gelöst in sehr wenig Wasser- hinzu, rührt kurz um und stellt die Wanne auf eine Heizplatte, deren Oberflächentemperatur ca. 120°Cbeträgt.

Nach kurzer Zeit beginnt die Reaktion lebhaft und unter Wasserverdampfung, wobei das ausgefallene feste Natriumacrylat langsam und vollständig in Lösung geht und mit einpolymerisiert wird. Nach Beendigung der Reaktion wird die harte Masse in grobe, maximal 1 cm große Stücke gebrochen oder mit einer Schere zerschnitten und bei 140°Cim Umluftschrank ca. 3 h getrocknet. Vor und nach der Trocknung wird zurückgewogen, der Feststoffgehalt der gebrochenen Masse beträgt nach der Polymerisation ca. 71 Gew.%.

Das getrocknete Polymer wird gemahlen und bei 150 - 850 Mikrometer abgesiebt. Es weist folgende Eigenschaften auf:

CRC = 34 g/g, AUL 0.3 psi = 15 g/g, Extrahierbare 3h =13 Gew.%

20 g des pulverisierten Polymers wird nun mit einer Lösung von 0,02 g Ethylengylcoldiglycidylether und 0,01 g Sorbitanmonolaurat (Span 20) in 1,0 g Wasser unter Rühren besprüht und anschließend 1 h bei 150°Cauf einem Uhrglas im Umluftschrank getrocknet. Es wird dann nochmals über ein 850 Mikrometer-Sieb gesiebt, um Klumpen zu entfernen.

Das getrocknete Polymer weist nun folgende Eigenschaften auf:

CRC = 30 g/g, AUL 0.3 psi = 31 g/g, AUL 0.7 psi = 24 g/g,

Extrahierbare 3h = 6 Gew.%

### Beispiel 3

In einem gut gerührten Laborreaktor mit Kühlmantel werden 316 g deionisiertes Wasser vorgelegt, darin werden dann 100 g festes Natriumacrylat gelöst und 330 g Acrylsäure hinzugefügt - die Temperatur wird hierbei zwischen 20 und 40°Cüber den Mantel gehalten. Dann werden langsam und unter guter Kühlung 254 g 50 Gew.%ige Natriumhydroxidlösung zugetropft, wobei die Temperatur der Reaktionslösung nicht über 40°Cansteigen darf. Es kommt zu einer teilweisen Ausfällung von feinteiligem Natriumacrylat welches zur Oberfläche aufschwimmt. Nach Beendigung der Laugezugabe wird auf 20°Cgekühlt und es werden noch 0,407 g 15-fach ethoxyliertes Trimethylolpropantriacrylat (SR 9035, Fa. Sartomer) zugegeben.

100 g dieser Reaktionslösung gibt man in eine kleine Wanne aus rostfreiem Stahl, so dass die Schichtdicke ca. 1 cm beträgt. Man fügt noch 0,10 g Kaliumpersulfat -gelöst in sehr wenig Wasser- hinzu, rührt kurz um und fügt dann eine winzige Spur Ascorbinsäure gelöst in wenig Wasser hinzu. Die Menge der Ascorbinsäure muss sehr klein gehalten werden, typisch unter 0,01 Gew.% bezogen auf Monomer, da es ansonsten zu einem sehr heftigen Start der Reaktion kommt.

Nach sehr kurzer Zeit beginnt die Reaktion lebhaft und unter Wasserverdampfung, wobei das ausgefallene feste Natriumacrylat langsam und vollständig in Lösung geht und mit einpolymerisiert wird. Nach Beendigung der Reaktion wird die harte Masse in grobe, ca. 1 cm große Stücke gebrochen oder mit einer Schere zerschnitten und bei 140°Cim Umluftschrank ca. 3 h getrocknet. Vor und nach der Trocknung wird zurückgewogen, der Feststoffgehalt der gebrochenen Masse beträgt nach der Polymerisation ca. 69 Gew.%.

Das getrocknete Polymer wird gemahlen und bei 150 - 850 Mikrometer abgesiebt. Es weist folgende Eigenschaften auf:

CRC = 37 g/g, AUL 0.3 psi = 10 g/g, Extrahierbare 3h = 14 Gew.%

20 g dieses pulverisierten Grundpolymers wird nun mit einer Lösung von 0,02 g Ethylengylcoldiglycidylether und 0,01 g Sorbitanmonococoat in 1,0 g Wasser unter Rühren besprüht und anschließend 1 h bei 150°Cauf einem Uhrglas im Umluftschrank getrocknet. Es wird dann nochmals über ein 850 Mikrometer-Sieb gesiebt, um Klumpen zu entfernen.

Das getrocknete Polymer weist nun folgende Eigenschaften auf:

CRC = 35 g/g, AUL 0.3 psi = 33 g/g, AUL 0.7 psi = 20 g/g,

Extrahierbare 3h = 7 Gew.%

### Beispiel 4

20 g des pulverisierten Grundpolymers aus Beispiel 3 wird mit einer Lösung von 0,03 g N-Hydroxyethyl-2-Oxazolidinon und 0,01 g Sorbitanmonococoat in 1,0 g Wasser unter Rühren besprüht und anschließend 1 h bei 175°Cauf einem Uhrglas im Umluftschrank getrocknet. Es wird dann nochmals über ein 850 Mikrometer-Sieb gesiebt, um Klumpen zu entfernen.

Das getrocknete Polymer weist nun folgende Eigenschaften auf:

CRC = 30 g/g, AUL 0.7 psi = 23 g/g, Extrahierbare 3h = 5 Gew.%.

### Beispiele 5-18 (nicht erfindungsgemäß) Herstellung Grundpolymer

In einen Lödige-Pflugscharkneter Typ VT 5R-MK (5 I Volumen) werden 2154,3 g einer 37,3 gew.%igen Natriumacrylatlösung (100 mol% neutralisiert) vorgelegt und dazu werden unter Rühren 109,2 g Natriumhydroxidlösung (50 Gew.%) zugefügt. Zu dieser Lösung werden 336,5 g Acrylsäure zügig und unter Rühren zugegeben. Dabei entsteht eine warme übersättigte Lösung des teilweise neutralisierten Natriumacrylats (hier 75 mol%), die beim Abkühlen oder Rühren langsam Natriumacrylatkristalle ausscheidet. Die Temperaturen der Natriumacrylatlösung, der Natriumhydroxidlösung und der Acrylsäure liegen zwischen 21 - 24 °C vor dem Mischen.

In diese Lösung werden 4,76 g des Vernetzers Trimethylolpropan-18 EO-Triacrylat zugemischt und unter Durchperlen von Stickstoff wird kurz inertisiert. Die Inertisierung in diesen hochkonzentrierten Lösungen ist leicht möglich, da der Sauerstoff bereits großenteils oder vollständig bei der vorangehenden Neutralisation entfernt wird (durch Verringerung der Löslichkeit beim Aufwärmen und durch in der Alkalilauge enthaltenes Carbonat). Gegebenfalls kann auf die Inertisierung auch vollständig verzichtet werden.

Dann wird die warme Lösung durch Zusatz (verdünnte wässrige Lösungen) von 2,67 g Natriumpersulfat gelöst in 10,66 g Wasser, 0,057 g Ascorbinsäure gelöst in 2,8 g Wasser sowie 0,048 g Wasserstoffperoxid gelöst in 2,33 g Wasser gestartet. Die Starttemperatur liegt bei den Beispielen 5-18 der Tabelle 1 bei weniger als 40 °C.

Nach dem Start wird die Temperatur des Heizmantels der Reaktionstemperatur im Reaktor mittels Regelung nachgeführt. Nach Erreichen der Peaktemperatur wird dann noch 3 Minuten gerührt, und schliesslich das Produkt vor dem Austragen aus dem Reaktor auf unter 50 °C heruntergekühlt. Dazu wird die Kühlflüssigkeit im Mantel auf -12 °C temperiert.

Das letztlich erhaltene krümelige Gel wird dann bei 160°C ca. 1,5 Stunden im Umlufttrockenschrank getrocknet.

Das getrocknete Grundpolymer wurde gemahlen und auf 300 bis 600 µm abgesiebt.

Die Eigenschaften des Grundpolymers (300 bis 600 µm) sind in der folgenden Tabelle 1 angegeben.

Die weiteren Monomerlösungen der Beispiele in Tabelle 1 werden völlig analog dadurch erhalten, dass die entsprechenden Mengen an 37,3 Gew.%iger Natriumacrylatlösung (100 mol% neutralisiert) mit 50 Gew.% Natriumhydroxidlösung überneutralisiert werden und dann mit der entsprechenden Menge 100 Gew.%ige Acrylsäure zurückgestellt werden.

Beispiele für Grundpolymere mit verschiedenen Neutralisationsgraden und Feststoffgehalten wurden so analog Beispiel 1 hergestellt.

Die Daten aller so hergestellten Grundpolymere sind in der folgenden Tabelle 1 zusammengefasst.

### Nachvernetzung

Jeweils 20 g der Grundpolymere aus den Beispielen 7 bis 18 werden mit 0,10 Gew% (bezogen auf eingesetztes Polymer) Ethylenglykoldiglycidylether gelöst in einem 1,2-Propandiol/Wasser-Gemisch (30:70 Gewichtsanteile) durch Aufsprühen unter Rühren im Waring-Labormischer mit stumpfem Rührorgan benetzt, wobei insgesamt 5 Gew.% (bezogen auf eingesetztes Polymer) des 1,2-Propandiol/Wasser-Gemischs eingesetzt werden. Die feuchten Polymerteilchen werden dann auf einem Uhrglas bei 150 °C für eine Stunde im Umlufttrockenschrank vernetzt und schliesslich durch ein 850 µm-Sieb zur Abtrennung von Klumpen gesiebt.

Die Daten dieser oberflächennachvernetzten Polymere sind ebenfalls in Tab 1 enthalten.

| | | | Vernetzer | Verntzer | Natrium- persulfat | Ascorbinsäure | Wasserstoffperoxid | CRC | AUL 0.3psi | Extra-hierbare 16h | CIE-Farbzahl | | | Oberflächen nachvernetz tes Polymer | |
|---|---|---|---|---|---|---|---|---|---|---|---|---|---|---|---|
| Beispiel | Fest- stoffgehalt | Neutralisationsgrad | Typ | Einsatzmenge Gew.% bez. | Einsatzmenge Gew.% bez. auf AS | Einsatzmenge Gew.% bez. auf AS | Einsatzmenge Gew.% bez. auf AS | [g/g] | [g/g] | [%] | L* | a* | b* | CRC | AUL 0.7 psi |
| 5 | 45,0% | 75% | TMP-18EO-TA | 0,50 | 0,28 | 0,006 | 0,005 | 31,3 | 23,6 | 6,2 | 87,6 | -0,6 | 5,0 | | |
| 6 | 45,0% | 75% | TMP-18EO-TA | 0,40 | 0,28 | 0,006 | 0,005 | 35,1 | 12,5 | 10,9 | 86,3 | -0,9 | 4,9 | | |
| | | | | | | | | | | | | | | | |
| 7 | 45,0% | 85% | Gly-3 EO-TA | 0,30 | 0,28 | 0,006 | 0,005 | 32,0 | 14,1 | 7,0 | 87,7 | -0,7 | 4,6 | 30,0 | 24,3 |
| 8 | 45,0% | 85% | Gly-3 EO-TA | 0,25 | 0,28 | 0,006 | 0,005 | 34,2 | 11,3 | 8,3 | 88,6 | -0,7 | 4,1 | 32,1 | 24,3 |
| 9 | 45,0% | 85% | Gly-3 EO-TA | 0,15 | 0,28 | 0,006 | 0,005 | 38,0 | 8,5 | 10,8 | 87,8 | -0,7 | 4,4 | 33,7 | 24,2 |
| | | | | | | | | | | | | | | | |
| 10 | 47,5% | 95% | Gly-3 EO-TA | 0,45 | 0,14 | 0,003 | ohne | 33,0 | 12,1 | 10,5 | 86,2 | -0,4 | 5,7 | 28,9 | 20,5 |
| 11 | 47,5% | 95% | Gly-3 EO-TA | 0,40 | 0,14 | 0,003 | ohne | 37,5 | 8,1 | 16,4 | 86,9 | -0,3 | 5,7 | 33,8 | 22,0 |
| 12 | 47,5% | 95% | Gly-3 EO-TA | 0,35 | 0,14 | 0,003 | ohne | 42,3 | 7,6 | 18,6 | 86,5 | -0,1 | 4,6 | 36,2 | 20,5 |
| 13 | 47,5% | 85% | Gly-3 EO-TA | 0,35 | 0,14 | 0,003 | ohne | 31,2 | 12,9 | 6,6 | 86,7 | -0,3 | 5,9 | 28,8 | 23,3 |
| 14 | 47,5% | 85% | Gly-3 EO-TA | 0,30 | 0,14 | 0,003 | ohne | 33,3 | 11,4 | 7,9 | 86,2 | -0,5 | 6,4 | 30,3 | 22,6 |
| 15 | 47,5% | 85% | Gly-3 EO-TA | 0,25 | 0,14 | 0,003 | ohne | 36,2 | 9,3 | 8,6 | 86,9 | -0,4 | 5,3 | 32,1 | 22,7 |
| 16 | 47,5% | 75% | Gly-3 EO-TA | 0,30 | 0,14 | 0,003 | ohne | 29,6 | 17,5 | 5,4 | 87,2 | -0,4 | 6,9 | 27,5 | 24,3 |
| 17 | 47,5% | 75% | Gly-3 EO-TA | 0,25 | 0,14 | 0,003 | ohne | 31,9 | 14,4 | 6,3 | 87,5 | -0,3 | 6,1 | 29,0 | 23,9 |
| 18 | 47,5% | 75% | Gly-3 EO-TA | 0,20 | 0,14 | 0,003 | ohne | 35,0 | 10,5 | 8,0 | 88,0 | -0,4 | 5,8 | 30,5 | 24,8 |

TMP-18 EO-TA bedeutet hierin das Triacrylat des 18-fach ethoxylierten Trimethylolpropans;

Gly-3 EO-TA bedeutet das Triacrylat des 3-fach ethoxylierten Glycerins.

Die in der Tabelle 1 angegebenen Vernetzer- und Initiatormengen beziehen sich auf die eingesetzte Monomermenge gerechnet als Acrylsäure (AS).

## Patentansprüche

1. Verfahren zur Herstellung von Polymeren, die (Meth)acrylatsalzeinheiten enthalten, durch radikalische Polymerisation von (Meth)acrylatsalz und gegebenenfalls anderen Monomeren in wässrigem Medium, **dadurch gekennzeichnet, dass** man eine übersättigte wässrige Lösung von (Meth)acrylatsalz einsetzt und man zur Herstellung der übersättigten wässrigen Monomerlösung festes, wasserfreies (Meth)acrylatsalz einsetzt.

2. Verfahren nach Anspruch 1, **dadurch gekennzeichnet, dass** man eine übersättigte wässrige Lösung von (Meth)acrylatsalz einsetzt, die 40 bis 90 Mol-% (Meth)acrylatsalz und 10 bis 60 Mol-% (Meth)acrylsäure enthält.

3. Verfahren nach Anspruch 1 oder 2, **dadurch gekennzeichnet, dass** der Reaktor für die Polymerisation, ein Sprühpolymerisationsreaktor oder ein kontinuierliches Polymerisationsband ist.

4. Verfahren nach einem der Ansprüche 1 bis 3, **dadurch gekennzeichnet, dass** die übersättigte wässrige Lösung 0,001 bis 5 Mol-% eines oder mehrerer mindestens zwei ethylenisch ungesättigte Doppelbindungen aufweisenden Monomeren enthält.

5. Verfahren nach einem der Ansprüche 1 bis 4, **dadurch gekennzeichnet, dass** man festes (Meth)acrylatsalz mit einem Wassergehalt von 0,1 bis 10 Gew.-% zur Herstellung der übersättigten wässrigen Lösung einsetzt.

6. Verfahren nach einem der Ansprüche 1 bis 5, **dadurch gekennzeichnet, dass** eine übersättigte wässrige Lösung oder Dispersion von (Meth)acrylatsalz eingesetzt wird, welche durch Neutralisation von (Meth)acrylsäure mit Lauge, Hydroxid, Carbonat oder Hydrogencarbonat erhalten wird.

7. Verfahren nach einem der vorherigen Ansprüche, **dadurch gekennzeichnet, dass** (Meth)acrylatsalz Natriumacrylat bedeutet.

8. Verwendung von festem Salzen des (Meth)acrylat zur Herstellung von Polymeren durch Lösen des festen Salzes des (Meth)acrylats in Wasser zu einer übersättigten wässrigen Monomerlösung und Polymerisieren der Monomerlösung gegebenenfalls in Gegenwart von anderen Monomeren.

## Claims

1. A process for preparing a polymer comprising (meth)acrylate salt units by free-radical polymerization of (meth)acrylate salt and optionally other monomers in an aqueous medium, which comprises using a supersaturated aqueous solution of (meth)acrylate salt and preparing the supersaturated aqueous monomer solution using solid anhydrous (meth)acrylate salt.

2. The process according to claim 1 wherein the supersaturated aqueous solution of (meth)acrylate salt used comprises 40 to 90 mol% of (meth)acrylate salt and 10 to 60 mol% of (meth)acrylic acid.

3. The process according to claim 1 or 2 wherein the reactor for the polymerization is a spray polymerization reactor or a continuous polymerization belt.

4. The process according to any of claims 1 to 3 wherein the supersaturated aqueous solution comprises 0.001 to 5 mol% of one or more monomers comprising two or more ethylenically unsaturated double bonds.

5. The process according to any of claims 1 to 4 wherein the supersaturated aqueous solution is prepared using solid (meth)acrylate salt having a water content from 0.1% to 10% by weight.

6. The process according to any of claims 1 to 5 wherein (meth)acrylate salt is used in the form of a supersaturated aqueous solution or dispersion obtained by neutralization of (meth)acrylic acid with aqueous hydroxide solution, hydroxide, carbonate or hydrogencarbonate.

7. The process according to any preceding claim wherein (meth)acrylate salt denotes sodium acrylate.

8. The use of a solid salt of a (meth)acrylate for preparing a polymer by dissolving a solid salt of a (meth)acrylate in water to form a supersaturated aqueous monomer solution and polymerizing the monomer solution optionally in the presence of another monomer.

## Revendications

1. Procédé pour la préparation de polymères qui contiennent des motifs de type sel (méth)acrylate, par polymérisation radicalaire d'un sel (méth)acrylate et éventuellement d'autres monomères en milieu aqueux, **caractérisé en ce qu'**on utilise une solution aqueuse sursaturée de sel (méth)acrylate et pour la préparation de la solution aqueuse sursaturée de monomère on utilise un sel (méth)acrylate solide, anhydre.

2. Procédé selon la revendication 1, **caractérisé en ce qu'**on utilise une solution aqueuse sursaturée de sel (méth)acrylate qui contient de 40 à 90 % en moles de sel (méth)acrylate et de 10 à 60 % en moles d'acide (méth)acrylique.

3. Procédé selon la revendication 1 ou 2, **caractérisé en ce que** le réacteur pour la polymérisation est un réacteur de polymérisation par pulvérisation ou une bande pour polymérisation continue.

4. Procédé selon au moins l'une des revendications 1 à 3, **caractérisé en ce que** la solution aqueuse sursaturée contient de 0,001 à 5 % en moles d'un ou plusieurs monomères comportant au moins deux doubles liaisons à insaturation éthylénique.

5. Procédé selon l'une quelconque des revendications 1 à 4, **caractérisé en ce que** pour la préparation de la solution aqueuse sursaturée on utilise un sel (méth)acrylate solide ayant une teneur en eau de 0,1 à 10 % en poids.

6. Procédé selon l'une quelconque des revendications 1 à 5, **caractérisé en ce qu'**on utilise une dispersion ou solution aqueuse sursaturée de sel (méth)acrylate qui est obtenue par neutralisation d'acide (méth)acrylique avec une solution alcaline, un hydroxyde, un carbonate ou un hydrogénocarbonate.

7. Procédé selon l'une quelconque des revendications précédentes, **caractérisé en ce que** sel (méth)acrylate signifie acrylate de sodium.

8. Utilisation de sels solides du (méth)acrylate pour la préparation de polymères par dissolution du sel solide du (méth)acrylate dans de l'eau pour l'obtention d'une solution aqueuse sursaturée de monomère et polymérisation de la solution de monomère éventuellement en présence d'autres monomères.
